# EUROPÄISCHE PATENTSCHRIFT

(11) **EP 2 778 138 B1**
(45) Veröffentlichungstag und Bekanntmachung des Hinweises auf die Patenterteilung: **18.10.2017**
(21) Anmeldenummer: 14158645.3
(22) Anmeldetag: 10.03.2014
(51) Int. Cl.: C01G 1/00, C01G 1/06, C01G 15/00

(54) **Verfahren zur Erzeugung von Metallhalogeniden oder Metalloxidhalogeniden aus Metall-Sauerstoffverbindungen oder Metallen**
Method for the generation of metal halides or metal oxyhalides from metal oxygen compounds or metals
Procédé de production d'halogénures métalliques ou d'halogénures d'oxyde métallique à partir de liaisons métal-oxygène ou de métaux

(30) Priorität: 11.03.2013 DE 102013004172
(43) Veröffentlichungstag der Anmeldung: 17.09.2014
(73) Patentinhaber: Fraunhofer-Gesellschaft zur Förderung der angewandten Forschung e.V., 80686 München (DE)
(72) Erfinder: Binnewies, Michael, 48161 Münster (DE); Bokelmann, Katrin, 97082 Würzburg (DE)
(74) Vertreter: Pfenning, Meinig & Partner mbB

(56) Entgegenhaltungen:
- DE-A1- 2 841 039
- US-A- 4 317 800
- PARK K S ET AL: "Recovery of indium from In2O3 and liquid crystal display powder via a chloride volatilization process using polyvinyl chloride", THERMOCHIMICA ACTA, ELSEVIER SCIENCE PUBLISHERS, AMSTERDAM, NL, Bd. 493, Nr. 1-2, 10. September 2009 (2009-09-10), Seiten 105-108, XP026351021, ISSN: 0040-6031 [gefunden am 2009-03-19]

## Beschreibung

Die vorliegende Erfindung betrifft ein Verfahren zur Erzeugung von Metallhalogeniden oder Metalloxidhalogeniden aus Metall-Sauerstoffverbindungen, insbesondere Mischoxiden oder Metallen, bei dem die Ausgangsmaterialien mit einem Halogenierungsreagenz umgesetzt werden. Dabei erfolgt die Erzeugung des Halogenierungsreagenzes ortsverschieden vom Ort der Reaktion mit den Metall-Sauerstoffverbindungen oder Metallen.

Das Recycling strategischer Metalle wird seit langem für das Metall Gold betrieben. Als Quelle dient hier insbesondere Elektronikschrott. Nach Einführung des Autoabgaskatalysators werden auch Platin-Metalle in beträchtlichem Umfang zurück gewonnen. Massenmetalle wie Eisen werden seit Jahrzehnten wiederholt genutzt. Es sind jedoch nur unzulängliche Strategien verfügbar, um Metalle wie Antimon, Gallium, Indium, Germanium, Niob, Tantal oder Tellur, sogenannte Gewürzmetalle, aus technischen Produkten, in denen sie in teilweise nur sehr geringen Anteilen vorliegen, zurück zu gewinnen.

Metalle, wie z.B. Indium sind in der Erdkruste nur in geringen Mengen vorhanden. Der Zeithorizont für die Nutzung natürlicher Vorkommen ist relativ kurz. Zurzeit liegt die Weltjahresproduktion für Indium bei ca. 400 t, die Weltressourcen werden auf 6000 t geschätzt. Daraus ergibt sich bei einem als konstant angenommenem jährlichen Verbrauch ein Zeithorizont von ca. 15 Jahren für die Nutzung natürlicher Ressourcen. Bis weit in die zweite Hälfte des 20. Jahrhunderts gab es nur wenige praktische Anwendungen für Indium: Es fand (und findet) in folgenden Bereichen Verwendung
- In Form von Draht als Dichtmaterial
- Als Dotierungselement in der Halbleitertechnik
- Als Bestandteil in III/V-Halbleitern
- Als Legierungselement

Ein neues Anwendungsfeld für Indiumverbindungen ist die Solartechnologie (CIGSZellen, CuGa₁₋ₓInₓSe₂ und verwandte Verbindungen). Aufgrund der erwarteten Langlebigkeit von Solarzellen kommen diese für ein Recycling zurzeit nicht, mittel- und langfristig jedoch sehr wohl in Betracht.

Ein weiteres, sehr stark expandierendes Anwendungsgebiet von Indiumverbindungen ist die Beleuchtungstechnologie; weiße Leuchtdioden enthalten Ga₁₋ₓInₓN, zusätzlich verschiedene (in der Regel drei) Leuchtstoffe sowie Gold zur Konkaktierung. Allein die Fa. Osram stellt pro Jahr ca. 10¹⁰ Leuchtdioden her und hält damit ca. 25 % der Weltjahresproduktion. Aufgrund der zu erwartenden Langlebigkeit von Leuchtdioden ist der Anfall von recyclebaren Leuchtdioden zurzeit noch gering wird aber mittelfristig stark ansteigen. Hier ist zu bemerken, dass die Lebensdauer von Konsumgütern, die Leuchtdioden enthalten, deutlich kürzer sein kann als die die Lebensdauer der Leuchtdioden selbst (Beispiel Automobil/Automobilbeleuchtung).

Seit einer Reihe von Jahren ist insbesondere durch die zunehmende Verbreitung von Flachdisplays ein weiteres, sehr breites Anwendungsfeld für Indium entstanden, LCD-Displays finden in diversen elektronischen Geräten Verwendung; diese machen ein zeitnahes Recycling notwendig. Für die Funktionsweise von LCD-Flachdisplays ist eine dünne, elektrisch leitfähige und gleichzeitig optisch transparente Schicht notwendig. Diese Schicht dient der Ansteuerung einer Schicht aus Flüssigkristallen, die ihrerseits das weiße Licht der Hintergrundbeleuchtung eines Flachdisplays in Form von Pixeln in das darzustellende Bild umsetzt. Für derartige Schichten werden so genannte TCOs (transparent conductive oxides) benötigt. Derartige TCOs sind
- ITO (indium tin oxide), eine Mischphase aus ca. 90 % In₂0₃ und 10 % Sₙ0₂
- FTO (fluorine doped tin oxide, Sn0₂:F)
- AZO (aluminium doped zinc oxide, ZnO:Al)
- ATO (antimony doped tin oxide Sn0₂:Sb)

ITO hat sich als für diesen Zweck als das am besten geeignete Material erwiesen. Es wird in Form einer dünnen Schicht (Schichtdicke ca. 200 nm) flächendeckend auf eine Glasplatte, in einigen Fällen auch auf eine Kunststofffolie aufgebracht. Für die Ansteuerung der einzelnen Pixel wird zusätzlich eine Struktur aus metallischen Leitern benötigt.

**Einige Eigenschaften von ITO** (In₂0₃)_{0,9}(Sn0₂)_{0,1}:
CAS-Nummer 50926-11-9
*M* = 264,94 g·mor⁻¹
Indiumanteil w(In) = 78 0/0
*P* = 7,12 g 'cm⁻³

Gefahrstoffkennzeichnung:
H- und P-Sätze H: 315-319-335, P: 261-305+351+338
R- und S-Sätze: R: 37, S: 60

Der Weltmarktpreis von Indium liegt zurzeit bei etwa 500 $/kg.

Flachdisplays finden zunehmend mehr Anwendungen. Sie finden sich u.a. in folgenden Geräten:
- **Handys** (Displayfläche 5*5 cm², 25 cm², Displayfläche: Tendenz steigend,
   Anzahl: Tendenz gleich bleibend).
   Anzahl: 120 10⁶ (Pressemitteilung), Gesamtfläche: 0,3 10⁶ m².
- **LCD-Fernsehgeräte** (70*40 cm², 2800 cm², Displayfläche: Tendenz steigend,
   Anzahl: Tendenz steigend).
   Anzahl: 15 10⁶ (geschätzt), Gesamtfläche: 4,2 10⁶ m².
- **Laptops** (40*30 cm², 1200 cm², Displayfläche: Tendenz gleich bleibend, Anzahl: Tendenz gleich bleibend).
   Anzahl: 10106 (geschätzt), Gesamtfläche: 1,2 10⁶ m².
- **Navigationsgeräte** (10*7 cm², 70 cm², Displayfläche: Tendenz gleich bleibend, Anzahl: Tendenz sinkend).
   Anzahl: 15 10⁶ (geschätzt), Gesamtfläche: 0,1106 m².
- **Digitalkameras** (6*4 cm², 24 cm², Displayfläche: Tendenz gleich bleibend,
   Anzahl: Tendenz steigend).
   Anzahl: 20 10⁶ (geschätzt), Gesamtfläche: 0,05 10⁶ m².
- **Monitore** (30*50 cm², 1500 cm², Displayfläche: Tendenz gleich bleibend,
   Anzahl: Tendenz gleich bleibend).
   Anzahl: 20 10⁶ (Pressemitteilung), Gesamtfläche: 3 10⁶ m².
- **Diverse Kleindisplays** in KFZ, Bürogeräten, Unterhaltungselektronik ... , Displayfläche: Tendenz ansteigend, Anzahl: Tendenz ansteigend. Gesamtfläche (geschätzt): 1 10⁶ m².

Daraus ergibt sich rechnerisch eine Gesamtfläche aller Displays von ca. 10⁷ m² und folgende prozentuale Verteilung auf die verschiedenen Arten von Displays (Tabelle 1):

**Tabelle 1: Prozentuale Verteilung der Flächen von LCD-Displays.**

| Handy | LCD-FS | Laptop | Navigation | Kamera | Monitor | Sonstige |
|---|---|---|---|---|---|---|
| 3 % | 43 % | 12 % | 1 % | <1 % | 30 % | 10 % |

Man erkennt, dass kleinformatige Displays nur eine untergeordnete Rolle spielen, der Anteil von LCD-Fernsehern, Laptops und Monitoren insgesamt liegt bei ca. 85 %. Ob die Zerlegung von Geräten mit kleinen Displays wirtschaftlich vertretbar ist, muss geprüft werden.

Die insgesamt in Deutschland verfügbare Menge an ITO auf verschiedenen Displays wird auf ca. 14t ITO geschätzt, was ca. 11 reinem Indium entspricht. Dies entspricht etwa 3% der Weltjahresproduktion und einem Wert von derzeit ca. 5,5 Mio $.

Geht man von einer mittleren Lebensdauer der genannten elektronischen Geräte von 4 Jahren aus, würden bei einer Recyclingquote von 100 % 14 t/4 a = 3,5 t ITO/a anfallen. Realistisch würde man etwa 2 t ITO/a erwarten.

LCD-Displays sind recht einfach zu zerlegen. Sie bestehen aus der mit ITO beschichteten Frontscheibe (Dicke 0,5 bis 1 mm), die ggf, mit einer Kunststofffolie beschichtet ist. Dahinter befinden sich frei liegend mehrere beschichtete Kunststofffolien und eine bis zu einigen Millimetern dicke Kunststoffplatte zur Einkopplung des Lichts. Dieses Bündel wird in der Regel durch einige Klammern zusammengehalten, die leicht zu entfernen sind, sodass die beschichtete Frontscheibe leicht zugänglich ist, wenn das Gehäuse des jeweiligen Geräts geöffnet ist. Verfahren zur Entfernung der fest mit der Glasscheibe verklebten Kunststofffolie müssen entwickelt werden, um eine Zerkleinerung der Glasplatte zu ermöglichen.

Die gesamte Masse an Glas beträgt m(Glas) = 10¹¹ cm² 0,07 cm · 2,5g·cm⁻³ = 1,75 · 10¹⁰ g = 1,75 10⁴ t Glas. Dies entspricht einer anfallenden Menge von etwa 1,75 · 104 t/4 a = 4350 t Glas jährlich bei einer Recyclingquote von 100 %, realistisch etwa 2000 bis 2500 t.

Fazit: Es müssen ca. 2000 t beschichtetes Glas verarbeitet werden, um 2 t ITO (bei 100 % Ausbeute) zu gewinnen (Wert zurzeit ca. 1 Mio $) (Recyclingquote ca. 50 %).

Nachfolgend werden einige aus dem Stand der Technik bekannte Konzepte für ein Recycling von Seltenerdmetallen, insbesondere Indium aus LCD-Displays diskutiert.

### Recycling aus wässeriger Lösung

Indiumoxid löst sich in heißen Mineralsäuren. Im Prinzip ist es also möglich, Indium in eine wässerige Lösung zu überführen. SnO₂ löst sich unter diesen Bedingungen nicht in Säuren. Die Behandlung mit Säuren lässt also eine Trennung von Indium und Zinn erwarten. Insgesamt werden beträchtliche Mengen an Säure benötigt (mehrere tausend Tonnen/a), zudem hat die sich bildende Lösung eine niedrige Konzentration. In der Praxis wird es sich kaum vermeiden lassen, dass auch andere Metall-Kationen in eine solche Lösung gelangen. Indium kann im Prinzip aus sauren wässerigen Lösungen elektrolytisch abgeschieden werden; eine vorherige Konzentrierung der Lösung und ggf. eine Abtrennung anderer Lösungsbestandteile ist jedoch unerlässlich. Alternativ kann Indium als In(OH)₃ gefällt, abgetrennt und in In₂O₃ überführt werden. Hier ist ggf. eine vorherige Abtrennung anderer Inhaltstoffe erforderlich oder zumindest sinnvoll.

### Recycling über die Gasphase

Das Recycling und die Abtrennung eines Metalls (z.B. Indium) über die Gasphase haben gegenüber der Verwendung flüssiger Phasen, hier einer Säure-Lösung, Vor- und Nachteile. Ein gravierender Vorteil ist die Vermeidung von Abwässern. Nachteil ist häufig ein erhöhter Energieeinsatz, denn die Bildung flüchtiger Verbindungen des jeweiligen Metalls erfordert in der Regel höhere Temperaturen. Für die Abtrennung eines Metalls über die Gasphase kommt in erster Linie ein strömendes System infrage, in dem das abzutrennende Metall aus einem Reaktor als flüchtige Verbindung in einem Trägergasstrom mitgeführt und unter geeigneten Bedingungen an einem anderen Ort in fester oder flüssiger Form kondensiert wird. Dieses kann unter folgenden Voraussetzungen gelingen.
- Die Verbindung, in der zu gewinnende Metall vorliegt, hat bei sinnvollen Reaktionsbedingungen einen genügend hohen Dampfdruck.
- Die Verbindung, in der das zu gewinnende Metall vorliegt, lässt sich durch Zusatz eines anderen Stoffs bei sinnvollen Reaktionsbedingungen in die Gasphase überführen. Die Gleichgewichtslage einer solchen Reaktion sollte möglichst weit auf Seiten der Reaktionsprodukte liegen (Δ_{R} G⁰_{T} ≤ 0 kJ·mol⁻¹).
- Der Partialdruck der gasförmigen Spezies, in der das abzutrennende Metall enthalten ist, sollte mindestens 10 mbar, besser 100 mbar betragen, um einen hinreichend großen Effekt zu gewährleisten (bei einem Gesamtdruck von 1 bar).
- Optimale Bedingungen liegen dann vor, wenn es gelingt, das abzutrennende Metall möglichst selektiv in die Gasphase zu überführen.

Ma et al. beschreiben in Green Chem., 2012, 14, 3395 eine Methode zum Recycling von Indium aus Flüssigkristall-Displayabfällen, bei dem geschredderte LCD-Paneele mit Ammoniumchlorid vermischt und zur Reaktion gebracht werden. Dabei reagiert Ammoniumchlorid mit dem enthaltenden Indiumoxid, z.B. in Form von ITO zu Indiumchlorid und kann aus der Gasphase abgetrennt werden. Problematisch bei diesem Verfahren ist allerdings, dass eine vollständige Abreaktion des Indiums bei Einsatz dieser Mischung nicht gewährleistet werden kann: So muss stets ein großer Überschuss an Ammoniumchlorid verwendet werden, um zu gewährleisten, dass ein Großteil des Indiums zurückgewonnen werden kann. Ebenso ist nachteilig, dass das Herstellen des eingesetzten Mischung aus LCD-Abfällen und Ammoniumchlorid möglichst unter Feuchtigkeitsausschluss erfolgen muss, um eine bereit währende der Hydrolyse des Gemisches stattfindende Reaktion von Indiumchlorid zu Hydroxiden bzw. Oxid-Spezies zu vermeiden. Die Reaktionsbedingungen des hier vorgestellten Verfahrens sind somit nur unzulänglich einstell- und steuerbar. Weiter nachteilig ist, dass hohe Temperaturen bei diesem Verfahren nicht realisiert werden können. Zwar wäre bei hohen Temperaturen eine höhere Umsatzrate von Indiumoxid zu Indiumchlorid zu erwarten, allerdings besteht die Gefahr der Zersetzung des beim Erhitzen von Ammoniumchlorid freigesetzten Ammoniaks zu Wasserstoff und Stickstoff, oder eine beginnende Bildung von potentiell explosiven Aziden oder Nitriden.

K.-S. Park et al. beschreiben in Thermochimica Acta 493(2009) 105-108 das Recyceln von Indium aus Indiumoxid aus Flüssigkristallbildschirmen mittels eines Chlor-basierten Verdampfungsverfahrens unter Verwendung von Polyvinylchlorid.

US 4,317,800 beschreibt ein Verfahren zur Erniedrigung der Umweltverschmutzung, die aus dem Entsorgen von Abfällen, die halogenierte Kohlenwasserstoffe beinhalten, resultieren.

Ausgehend hiervon war es daher Aufgabe der vorliegenden Erfindung ein verbesserte Verfahren zum Recycling von Gewürzmetall-haltigen Abfällen, insbesondere Indium-haltigen Abfällen anzugeben, bei dem die oben genannten Problematiken nicht auftreten. Insbesondere soll das Verfahren möglichst einfach zu handhaben und zu steuern sein. Zudem soll mit der vorliegenden Erfindung ebenso die Verwendung eines entsprechenden Verfahrens angegeben werden.

Diese Aufgabe wird bezüglich eines Verfahrens mit den Merkmalen des Patentanspruchs 1gelöst. Die abhängigen Patentansprüche stellen dabei vorteilhafte Weiterbildungen dar.

Erfindungsgemäß wird somit ein Verfahren zur Erzeugung von Metallhalogeniden oder Metalloxidhalogeniden aus Metall-Sauerstoffverbindungen oder Metallen angegeben, bei dem in einer ersten Reaktionsstufe mindestens ein bei den in der ersten Reaktionsstufe vorherrschenden Bedingungen gasförmiges Halogenierungsreagenz erzeugt wird, das in einer lokal von der ersten Reaktionsstufe getrennten zweiten Reaktionsstufe mit der Metall-Sauerstoffverbindung oder Metall zur Reaktion gebracht wird, wobei das die Metall-Sauerstoffverbindung oder Metall in das Metallhalogenid oder Metalloxidhalogenid überführt und das erzeugte Metallhalogenid oder Metalloxidhalogenid anschließend in gasförmigem Aggregatszustand aus der zweiten Reaktionsstufe ausgetragen und aus dem gasförmigen in den flüssigen oder festen Aggregatszustand überführt wird oder die Rückreaktion seiner Bildung eingeht, wobei die zweite Reaktionsstufe der ersten Reaktionsstufe nachgeschaltet ist und das in der ersten Reaktionsstufe erzeugte mindestens eine Halogenierungsreagenz mittels eines Gasstromes in die zweite Reaktionsstufe befördert wird.

Als Metall-Sauerstoffverbindungen oder Metalle kommen dabei zum Beispiel einzelne Metall-Sauerstoffverbindungen bzw. einzelne Metalle in Frage. Ebenso ist es möglich, dass Gemische von mehreren Metall-Sauerstoffverbindungen untereinander vorliegen, sodass in einer einzigen Reaktionsstufe mehrere verschiedene Metallhalogenide oder Metalloxidhalogenide aus den mehreren Metall-Sauerstoffverbindungen erzeugt werden können. Ebenso ist es möglich, dass mehrere Metalle, sei es einzeln nebeneinander oder als Legierung vorliegen, sodass beim erfindungsgemäßen Verfahren ebenso mehrere Metallhalogenide oder Metalloxidhalogenide aus den mehreren Metallen erzeugt werden können. Zudem ist es möglich, dass eine oder mehrere Metall-Sauerstoffverbindungen im Gemisch mit einem oder einzelne Metall-Sauerstoffverbindungen bzw. einzelne Metalle in Frage. Ebenso ist es möglich, dass Gemische von mehreren Metall. Sauerstoffverbindungen untereinander vorliegen, sodass in einer einzigen Reaktionsstufe mehrere verschiedene Metallhalogenide oder Metalloxidhalogenide aus den mehreren Metall-Sauerstoffverbindungen erzeugt werden können. Ebenso ist es möglich, dass mehrere Metalle, sei es einzeln nebeneinander oder als Legierung vorliegen, sodass beim erfindungsgemäßen Verfahren ebenso mehrere Metallhalogenide oder Metalloxidhalogenide aus den mehreren Metallen erzeugt werden können. Zudem ist es möglich, dass eine oder mehrere Metall-Sauerstoffverbindungen im Gemisch mit einem oder mehreren Metallen vorliegen. Daneben ist es möglich, dass die Metall-Sauerstoffverbindungen und/oder Metalle in oder an eine Matrix gebunden vorliegen bzw. mit weiteren Stoffen vermischt vorliegen.

Das Halogenierungsreagenz kann z.B. durch eine chemische Reaktion (z.B. eine Zersetzung) oder durch physikalische Vorgänge (z.B. Änderung des Aggregatzustandes) in situ erzeugt werden.

Gemäß dem Konzept der vorliegenden Erfindung erfolgt somit die Erzeugung des Halogenierungsreagenzes und dessen Reaktion mit der eingesetzten Metall-Sauerstoffverbindung bzw. Metall an lokal unterschiedlichen Orten. Somit können jeweils für die Erzeugung des Halogenierungsreagenzes und dessen Reaktion mit der Metall-Sauerstoffverbindung und Metall an den jeweiligen Orten die optimalen Bedingungen eingestellt werden. Für den Fall, dass beispielsweise unterschiedliche optimale Temperatur-, Druck oder atmosphärische Bedingungen für die Erzeugung des gasförmigen Halogenierungsreagenzes und der Reaktion des Halogenierungsreagenzes mit der Metall-Sauerstoffverbindung oder Metall herrschen, kann die Erzeugung des Halogenierungsreagenzes bspw. bei anderen Temperaturen, Drücken oder in anderen Atmosphären ausgeführt werden, als die nachgeschaltete Reaktion des Halogenierungsreagenzes. Somit können jeweils für die einzelnen Reaktionsschritte die optimalen Bedingungen gewählt werden, wodurch die Effizienz, aber auch die Selektivität des Verfahrens wesentlich gesteigert werden.

Zu Metall-Sauerstoffverbindungen sind z.B. sauerstoffhaltige Metallsalze, zudem insbesondere Metalloxide sowie Metallmischoxide zu zählen. Zu den Metallsalzen sind dabei sämtliche Sauerstoff-haltigen Salze zu zählen wie z.B. Sulfate, Phosphate, Nitrate, etc.

Bevorzugte Halogenierungsreagenzien sind dabei ausgewählte aus der Gruppe bestehend aus
a) Halogenwasserstoffen, insbesondere HCl, HBr oder HI,
b) elementaren Halogenen, insbesondere Cl₂, Br₂ oder I₂,
c) vollständig oder teilweise halogenierten gesättigte oder ungesättigte Kohlenwasserstoffen, insbesondere CCl₄ oder C₂Cl₄,
d) vollständig oder teilweise halogenierte Silane oder Siloxane, insbesondere SiCl₄,
e) sowie Mischungen oder Kombinationen hiervon.

Das gasförmige Halogenierungsreagenz wird in der ersten Reaktionsstufe aus einer festen oder flüssigen Verbindung durch Dissoziation, Verdampfen oder Sublimation erzeugt werden.

Die für die zuvor genannte Reaktion bzw. Phasenzustandsänderung eingesetzte feste Verbindung ist dabei ausgewählt aus der Gruppe bestehend aus Substanzen, die unter Erwärmung Halogenwasserstoff oder elementare Halogene bilden, insbesondere Ammoniumchlorid, Ammoniumbromid, Ammoniumiodid, AlCl₃ · 6 H₂O, FeCl₃ · 6 H₂O, FeCl₂ · 6 H₂O, MgCl₂ · 6 H₂O sowie Mischungen oder Kombinationen hiervon.

Erfindungsgemäß geeignete flüssige Verbindungen können ausgewählt sein aus der Gruppe bestehend aus Verbindungen, die durch Verdampfen in das Halogenierungsreagenz überführt werden können.

Ebenso sind Kombinationen der zuvor genannten Verbindungen und/oder Verbindungsblasen einsetzbar.

Bevorzugt erfolgt der Austrag des erzeugten Metallhalogenids oder Metalloxidhalogenids in gasförmigem Aggregatszustand aus der zweiten Reaktionsstufe mittels des Gasstromes.

Besonders vorteilhaft ist hierbei, wenn der Gasstrom nacheinander die erste und die zweite Reaktionsstufe durchströmt.

Diese Ausgestaltungsform kann insbesondere dann gegeben sein, wenn das Verfahren in einem zweigeteilten Strömungsreaktor durchgeführt wird, in dem in der ersten Stufe die Erzeugung des Halogenierungsreagenzes, in der zweiten Stufe die Reaktion des erzeugten gasförmigen Halogenierungsreagenzes mit Metall-Sauerstoffverbindungen bzw. Metallen zweiten Stufe die Reaktion des erzeugten gasförmigenHalogenierungsreagenzes mit Metall-Sauerstoffverbindungen bzw. Metallen stattfindet. Beide Reaktionsstufen des Reaktors können dabei in direktem Anschluss nacheinander geschaltet sein.

Bevorzugte Gase, die für den Gasstrom geeignet sind, sind dabei ausgewählt aus der Gruppe bestehend aus Inertgasen, insbesondere Stickstoff, Edelgase, oder CO₂ sowie Mischungen oder Kombinationen hiervon. Vorteilhafterweise werden trockene oder vorgetrocknete Gase eingesetzt.

Bevorzugt wird in der ersten und/oder zweiten Reaktionsstufe ein Druck von 0,1 bis 2 bar, bevorzugt Atmosphärendruck eingestellt.

Bevorzugte Temperaturen, die in der ersten Reaktionsstufe eingestellt werden, werden dabei vorteilhafter Weise so gewählt, dass das Halogenierungsreagenz einen partiellen Gasdruck von ≥ 0,05 bar, bevorzugt von 0,1 bis 1 bar, bevorzugt von 0,5 bis 0,7 bar beträgt.

Bevorzugte Temperaturen für die zweite Reaktionsstufe werden so gewählt, dass das durch Reaktion mit dem Halogenierungsreagenz erzeugte Metallhalogenid oder Metalloxidhalogenid einen partiellen Gasdruck von ≥0,01 bar, bevorzugt von 0,05 bis 1 bar, besonders bevorzugt von 0,08 und 0,2 bar beträgt.

Durch die zuvor gewählten Bedingungen kann gewährleistet werden, dass sowohl das Halogenierungsreagenz als auch das erzeugte Metallhalogenid bzw. Metalloxidhalogenid in ausreichender Weise für eine schnelle und zügige Reaktion erzeugt und somit zur Verfügung steht. Ebenso ist durch die gewählten Bedingungen gewährleistet, dass durch den Abtransport des jeweiligen Reaktionsproduktes eine hinreichende Verschiebung der Gleichgewichtslage der jeweiligen Reaktion auf die Produktseite gegeben ist.

Das Metall des der Metall-Sauerstoffverbindungen bzw. des Metallhalogenids oder Metalloxidhalogenids ist bevorzugt ausgewählt aus Metallen, die Metallhalogenide oder Metalloxidhalogenide mit Siede- bzw. Sublimationstemperaturen von unterhalb 1700 °C bilden, bevorzugt Indium, Gallium, Germanium, Antimon, Wismut, Tellur, Niob, Tantal, Titan, Zirkon, Hafnium, Magnesium, Eisen, Kupfer, Zink oder Seltenerdmetalle, insbesondere Cer, Lanthan, sowie Gemische hiervon.

Im Falle von Metallhalogeniden oder Metalloxidhalogeniden mit einer Siede- oder Sublimationstemperatur von mehr als 800 °C kann der Gasstrom vorteilhafterweise mit Aluminiumchlorid und/oder Eisen-(III)-chlorid beladen.

Insbesondere bei Metallhalogeniden bzw. Metalloxidhalogeniden mit der zuvor genannten hohen Siede- oder Sublimationstemperatur kann durch diese besondere Maßnahme, nämlich dem Zusatz von Aluminiumchlorid bzw. Eisenchlorid eine Komplexbildung erfolgen, wobei ein Produkt resultiert, das eine wesentlich niedrigere Siede- oder Sublimationstemperatur aufweist. Das erzeugte Produkt kann nach Abschluss des Verfahrens aus dem resultierenden Gasstrom abgetrennt und in einer nachgelagerten Reaktion in die einzelnen Bestandteile aufgespalten werden.

Weiter vorteilhaft ist, wenn den Metall-Sauerstoffverbindungen oder den Metallen und/oder dem Gasstrom vor der Reaktion ein Reagenz beigemischt wird, das mit dem Sauerstoff der Metall-Sauerstoffverbindungen unter Bildung einer Verbindung mit negativer Standardbildungsenthalpie reagiert, bevorzugt Schwefel, Kohlenstoff oder eine Kohlenstoff-haltige Zubereitung.

Die Metall-Sauerstoffverbindungen können vor Reaktion von ggf. vorhandenen organischen Verunreinigungen befreit und/oder zerkleinert werden.

Es können für die Reaktion die Metall-Sauerstoffverbindungen oder Metalle auf oder in einer Matrix, bevorzugt einer anorganischen Matrix, bevorzugt Glas oder Keramik, insbesondere Flachbildschirme von Handys, Laptops, Fernsehgeräten, Bildschirmen oder Displays oder Müllverbrennungsaschen, Braunkohleaschen, Rotschlamm oder Schlacken, wie z.B. Katalysatorschlacken gebunden sein.

In diesem Zusammenhang eignet sich das erfindungsgemäße Verfahren somit insbesondere zur Wiederaufarbeitung der zuvor genannten Matrix-Materialien, hierbei können die enthaltenen Metalle, bzw. Metall-Sauerstoffverbindungen von den restlichen Bestandteilen der Matrix abgetrennt werden. Somit dient das erfindungsgemäße Verfahren in diesem Falle zum Recycling der Metalle aus den entsprechenden Matrizes.

Insbesondere ist es bevorzugt, wenn das Verfahren kontinuierlich durchgeführt wird. Dies ist insbesondere mit dem bereits zuvor angesprochenen zweistufigen Reaktor möglich, wenn z.B. die Edukte (Metall-Sauerstoffverbindungen bzw. Metalle) kontinuierlich durch die erste und zweite Reaktionsstufe gefördert werden.

Um ein elementares Metall zu erhalten, kann im Anschluss zu dem voranstehend beschriebenen Verfahren das erhaltene Metallhalogenid oder Metalloxidhalogenid in einem nachgelagerten Verfahrensschritt zum elementaren Metall reduziert werden.

In einer besonders bevorzugten Ausführungsform wird das Verfahren in einem Strömungsreaktor durchgeführt, der eine erste und eine zweite Reaktionskammer, die separat voneinander temperierbar sind, aufweist, wobei die erste und die zweite Reaktionskammer der ersten und zweiten Reaktionsstufe entsprechen, die Reaktionskammern des Strömungsreaktors in Richtung von der ersten zur zweiten Reaktionskammer von einem Gasstrom durchströmbar sind und die Metall-Sauerstoffverbindungen als Schüttgut kontinuierlich durch die erste und zweite Reaktionskammer gefördert werden können.

Eine besonders bevorzugte Variante des Verfahrens sieht vor, dass Indiumchlorid aus Indiumoxid erzeugt wird, wobei in einer ersten Reaktionsstufe Chlorwasserstoff durch thermische Zersetzung von Ammoniumchlorid, bevorzugt bei Temperaturen von 100 bis 450 °C, insbesondere 300 und 400 °C erzeugt wird, der erzeugte Chlorwasserstoff mittels eines Gasstromes z.B. eines Stickstoffstromes in die zweite Reaktionsstufe überführt und dort mit Indiumoxid, bevorzugt bei Temperaturen von 300 bis 600 °C, insbesondere von 400 bis 500 °C zur Reaktion gebracht wird, wobei Indiumchlorid entsteht und das erzeugte Indiumchlorid anschließend mittels des Gasstroms in gasförmigem Aggregatszustand aus der zweiten Reaktionsstufe ausgetragen und als Feststoff abgeschieden wird.

Gemäß dieser Variante wird somit Indiumoxid als Metall-Sauerstoffverbindung und Ammoniumchlorid als Halogenierungsreagenz eingesetzt.

Insbesondere eignet sich dieses Verfahren zu Erzeugung von Indiumchlorid zur Durchführung in einem zuvor beschriebenen Strömungsreaktor, bei dem in der ersten Reaktionsstufe durch thermische Zersetzung aus Ammoniumchlorid Chlorwasserstoff erzeugt und in der zweiten Reaktionsstufe Indiumoxid mittels des erzeugten Chlorwasserstoffs in Indiumchlorid überführt wird.

Hierbei kann reines Indiumoxid eingesetzt werden, das Indiumoxid kann aber auch in Form der eingangs erwähnten Mischoxide, insbesondere in Form von ITO vorliegen. Fernen kann das Indiumoxid auch auf einem Substrat aufgebracht sein, bspw. auf einer Glasmatrix, wie dies bspw. bei Flachbildschirmen oder LCD-Displays gegeben ist.

In diesem Fall kann es gegeben sein, die Glasmatrix vor Durchführung des Verfahrens zu zerkleinern, indem z.B. Scherben oder ein Granulat aus der Glasmatrix erzeugt wird.

Das zuvor beschriebene Verfahren eignet sich insbesondere zum Recycling von Metallen, insbesondere zum Recycling von Metallen aus Flachbildschirmen von Handys, Laptops, Fernsehgeräten, Bildschirmen oder Displays, Müllverbrennungsaschen, Braunkohleaschen, Rotschlamm oder Schlacken oder von auf Trägermaterialien aufgebrachten katalytisch wirksamen Metallen.

Insbesondere kann das erfindungsgemäße Verfahren zum Recycling von Indium aus Flachbildschirmen, z.B. Flachbildschirmen von Handys, Laptops, Fernsehgeräten oder Displays angewandt werden.

Die vorliegende Erfindung wird anhand der nachfolgenden Ausführungen sowie den beigefügten Figuren näher beschrieben, ohne die Erfindung auf die dargestellten Details zu beschränken.

Dabei zeigen
- Figur 1: einen zweistufig ausgebildeten Strömungsreaktor sowie
- Figuren 2-6: Gleichgewichtslagen für beispielhafte Reaktionen, die dem erfindungsgemäßen Verfahren zugrunde liegen.

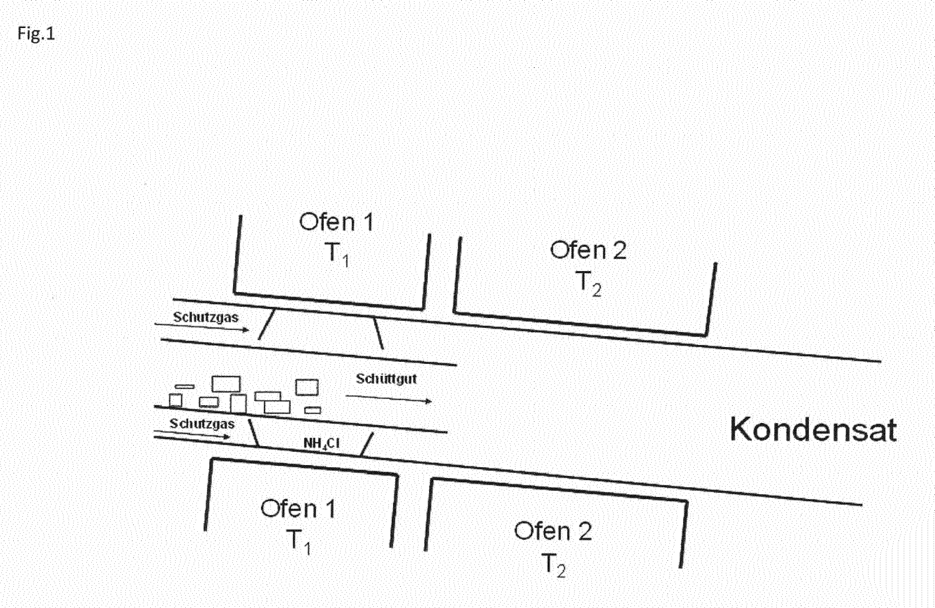

In Figur 1 ist ein Strömungsreaktor, der zweistufig ausgebildet ist, schematisch dargestellt. Der Strömungsreaktor umfasst dabei einen Ofen 1, der bei einer Temperatur T1 betrieben werden kann, sowie nachgeschaltet einen Ofen 2, der bei einer Temperatur T2 betrieben werden kann. Die Temperaturen T1 und T2 können dabei gleich oder verschieden sein. In der Regel wird T1 niedriger gewählt als T2. Durch die Öfen 1 und 2 wird kontinuierlich Schüttgut gefördert und durchläuft sukzessive Ofen 1 und Ofen 2. Im Bereich des Ofen 1 ist eine Bevorratungsmöglichkeit für eine Halogenierungsreagenz- im Beispiel des Falles der Figur 1 Ammoniumchlorid- bevorratet. Bei der in Ofen 1 vorherrschenden Temperatur T1 wird Ammoniumchlorid in Ammoniak und Chlorwasserstoff zersetzt und mit einem Schutzgasstrom, bspw. trockenem Stickstoff in den Ofen 2 transportiert. Bei dem in den Ofen 2 vorherrschenden Temperaturen T2 findet eine Reaktion des erzeugten Chlorwasserstoffs mit dem Schüttgut statt, das bspw. Indiumoxid oder ITO beinhalten kann. Bei den Temperatur T2 im Ofen 2 wird aus dem Indiumoxid bzw. ITO Indiumchlorid gebildet, das mit dem Schutzgasstrom aus Ofen 2 ausgetragen werden kann. Im Anschluss an Ofen 2 kann eine Kondensation oder Desublimation des erhaltenden Indiumchlorids stattfinden. Durch geeignete Reduktion kann aus dem so gewonnenen Indiumchlorid reines Indium erzeugt werden.

Bestimmte "seltene" Metalle, ausgewählt aus der Gruppe Ga, In, Ge, Sb, Bi, Te, Hf, Zr, Nb, Ta, SE-Metalle sollen aus Abfällen, in den sie bevorzugt an Sauerstoff gebunden vorliegen, mithilfe eines thermischen Verfahrens in Form leicht flüchtiger Verbindungen abgetrennt werden. Das Verfahren soll möglichst selektiv, nicht umweltbelastend und kostengünstig sein und dem Recycling dieser Metalle dienen.

Indium wird in Form von ITO (indium-tinoxide) als TCO (transparent conductive oxide), aufgebracht als dünne Schicht, bevorzugt auf einer Glasplatte, für verschiedene technische Anwendungen genutzt. Hauptverwendung sind Flachbildschirme in Mobiltelefonen, Laptops, Fernsehgeräten, Displays anderer Art. Aus Abfällen derartiger Geräte soll Indium mithilfe thermischer Verfahren in Form leicht flüchtiger Verbindungen abgetrennt werden.

Für den Fall, dass von Metalloxiden als Edukten ausgegangen wird, besteht die erfindungsgemäße Problemlösung daher in der Überführung des an Sauerstoff gebundenen Metalls, z.B. In, in eine leicht flüchtige Verbindung, bevorzugt eine Halogenverbindung, besonders bevorzugt eine Chlorverbindung, da diese genügend hohe Flüchtigkeit(en) aufweisen, um in gasförmiger Form abgetrennt werden zu können. Die Siedetemperaturen der Chloride der Elemente Ga, In, Ge, Sb, Bi, Te, Hf, Zr, Nb, Ta in ihrer jeweils höchsten Oxidationsstufe, liegen unterhalb von ca. 500°C, die der SE-Metalle wesentlich darüber (ca. 1500°C). Eine Abtrennung der SE-Metalle ist dennoch möglich, macht aber besondere Maßnahmen erforderlich wie z.B. den Zusatz von Eisen- oder Aluminiumchloriden zum Gasstrom oder dem eingesetzten Oxid. Bei Nb und Ta ist mit der Bildung von Oxidhalogeniden zu rechnen, die als NbOCl₃ bzw. TaOCl₃ jedoch gleichfalls unterhalb von ca. 500°C sieden und eine Abtrennung in gasförmiger Form erlauben.

Im Beispielsfalle von Indiumoxiden wird z.B. das an Sauerstoff gebundene Indium in eine leicht flüchtige Verbindung, bevorzugt eine Halogenverbindung, besonders bevorzugt eine Chlorverbindung überführt, da dies genügend höhe Flüchtigkeit aufweist, um in gasförmiger Form abgetrennt werden zu können. Die Siedetemperatur von Indium(III)-chlorid beträgt nach Literaturangaben 506°C (InBr₃: 409°C, InI₃: 446°C). Für eine Abtrennung in gasförmiger Form muss die Siedetemperatur nicht erreicht werden. Je nach Prozessführung genügt ein Dampfdruck zwischen 10⁻² und 1 bar, bevorzugt etwa 0,1 bar. Festes Indiumchlorid bildet diesen Druck bei ca. 440°C aus.

Die Auswahl des Reaktors hat der Tatsache Rechnung zu tragen, dass sehr große Stoffmengen umgesetzt werden müssen. Aus diesem Grunde kommt bevorzugt ein kontinuierlich zu beschickender Strömungsreaktor infrage. Da es sich bei den erfindungsgemäß gebildeten gasförmigen Produkten um sehr feuchtigkeitsempfindliche und chemisch aggressive Verbindungen handelt, muss der Prozess unter weitgehenden Feuchtigkeitsausschluss durchgeführt werden. Dies wird dadurch gewährleistet, dass der Prozess bevorzugt unter einem geeigneten trockenen Schutzgas durchgeführt wird. Besonders bevorzugt ist ein Gesamtdruck im Reaktor, der dem äußeren Atmosphärendruck entspricht. Eine Prozessführung unter vermindertem Druck erlaubt zwar in bestimmten Fällen niedrigere Prozesstemperaturen, ist aber mit einer kontinuierlichen Prozessführung nicht oder nur sehr bedingt vereinbar. Zudem ist mit erheblichen Korrosionsproblemen an den notwendigen Pumpen zu rechnen.

Das Sauerstoffverbindungen der o.g. Elemente enthaltende Gut, z.B. Indium(III)-oxid bzw. eine mit ITO beschichtetes anorganisches Substrat wird zunächst, falls erforderlich, durch ein geeignetes Verfahren von organischen Beimengungen befreit und falls erforderlich grob zerkleinert. Die Sauerstoffverbindungen der o.g. Elemente werden durch das erfindungsgemäße Verfahren in gasförmige Halogenverbindungen überführt, bevorzugt solche, die das jeweilige Element in einer hohen Oxidationsstufe enthalten. Beispielsweise wird die ITO-Beschichtung so vorbereiteter Scherben durch das erfindungsgemäße Verfahren in gasförmiges Indium(III)-chlorid überführt. Zur Verwendung kommt ein kontinuierlich betriebener Strömungsreaktor. Um einen genügend hohen Austrag zu gewährleisten, muss die Temperatur des Reaktors so hoch sein, dass die gebildeten Halogenverbindungen ausgetragen werden und nicht im Reaktor kondensieren. Bevorzugte Temperaturen sind die, bei denen die jeweiligen Halogenverbindung einen genügend hohen Druck von bevorzugt > 0,1 bar erreicht. Für die o.g. Elemente sind diese Temperaturen den aus der Literatur bekannten Dampfdruckkurven zu entnehmen. Bei mit ITO beschichteten Glassubstraten sind bevorzugte Temperaturen die, bei denen das Glassubstrat noch nicht erweicht und gleichzeitig Indium(III)-chlorid einen genügend hohen Druck von >0,1 bar erreicht. Als bevorzugte Temperaturbereich für Indiumoxid, z.B. ITO wird der zwischen 440 und 500 °C angesehen.

Um Sauerstoffverbindungen der o.g. Elemente in bei den Prozessbedingungen in gasförmige Chlorverbindungen zu überführen, kommen z.B. elementares Chlor sowie eine Reihe von Chlorverbindungen, oder auch eine Kombination mehrerer Reagenzien in Frage. Es sollte dabei sichergestellt sein, dass das jeweilige Reagenz oder die Kombination mehrerer Reagenzien bei der oben beschriebenen Mindesttemperatur möglichst vollständig zu den gasförmigen Chlorverbindungen reagieren. Zudem soll das jeweilige Reagenz oder die Kombination mehrerer Reagenzien preisgünstig und nicht umweltbelastend sein. Besonders bevorzugt sind solche Reagenzien, die bei der ausgewählten Reaktionstemperatur gasförmig vorliegen, damit sichergestellt ist, dass die im Reaktor befindlichen Sauerstoffverbindungen der o.g. Elemente erfasst werden.

Um z.B. Indium(III)-oxid bzw. Indium(III)-oxid insbesondere mit verminderter thermodynamischer Aktivität in Form von ITO in bei den Prozessbedingungen gasförmiges Indium(III)-chlorid zu überführen, kommen elementares Chlor sowie eine Reihe von Chlorverbindungen, oder auch einen Kombination mehrerer Reagenzien infrage. Es sollte dabei sichergestellt sein, dass das jeweilige Reagenz oder die Kombination mehrerer Reagenzien bei der oben beschriebenen Mindesttemperatur möglichst vollständig zu gasförmigen Indium(III)-chlorid reagieren. Besonders bevorzugt sind solche Reagenzien, die bei der ausgewählten Reaktionstemperatur gasförmig vorliegen, damit sichergestellt ist, dass das im Reaktor befindliche ITO vollständig erfasst wird.

Bei der Auswahl der Reagenzien, die geeignet sind, bei den Prozessbedingungen die gasförmigen Halogenverbindungen der o.g. Elemente insbesondere gasförmige Indium(III)-chlorid zu erzeugen, wird die Gleichgewichtslage bei der Prozesstemperatur betrachtet. Die Gleichgewichtskonstante(n) Kp soll(en) möglichst groß sein, um einen möglichst großen Anteil an dem gewünschten Reaktionsprodukt zu gewährleisten. Als besonders bevorzugt werden Werte für die Gleichgewichtskonstante bei Prozessbedingungen von > 1000 (In K > ca. 7) bei einer Druckangabe in bar angesehen. Nachfolgend werden einige als bevorzugt anzusehende Reagenzien betrachtet und hinsichtlich ihrer Eignung bewertet.

### Beispiel 1: Ammoniumchlorid

NH₄Cl(s) → HCl(g) + NH₃(g)

Kₚ = p(HCl) ·p(NH₃)
p(HCl) = p(NH₃)
Kₚ = p²(HCl)
p(HCl) = 0,6 bar = > Kₚ = 0,36 bar²

Um bei einer Reaktion von Indiumoxid bzw. ITO mit HCl einen ausreichenden Druck von In₂Cl₆ (bevorzugt ≥ 0,1 bar) zu erreichen, ist bei vollständiger Reaktion ein bevorzugter HCl-Druck von ≥ 0,6 bar notwendig.

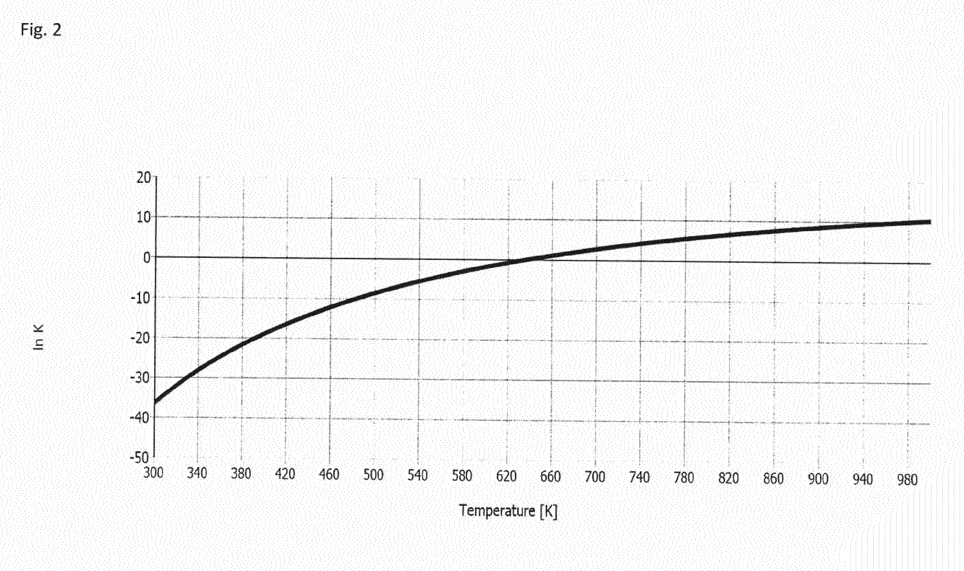

Die berechnete Lage der Gleichgewichtskonstante bei gegebener Temperatur ist in Fig. 2 dargestellt.

Die Gleichgewichtskonstante (Kₚ = 0,36bar², In K = -1) stellt sich bei ca. 620 K bzw. ca. 350°C ein.

Die Prozessführung ist besonders bevorzugt daher zu gestalten, dass NH₄Cl bei ca. 350°C zersetzt wird und der gebildete Dampf bei einer Temperatur mit dem Schüttgut (ITO) zur Reaktion gebracht wird, bei der der Dampfdruck von Indiumchlorid den bevorzugten Wert von 0,1 bar überschreitet (T > 710 K).

### Beispiel 2: Chlorwasserstoff

In₂O₃(s) + 6 HCl(g) → In₂Cl₆(g) + 3 H₂O(g)

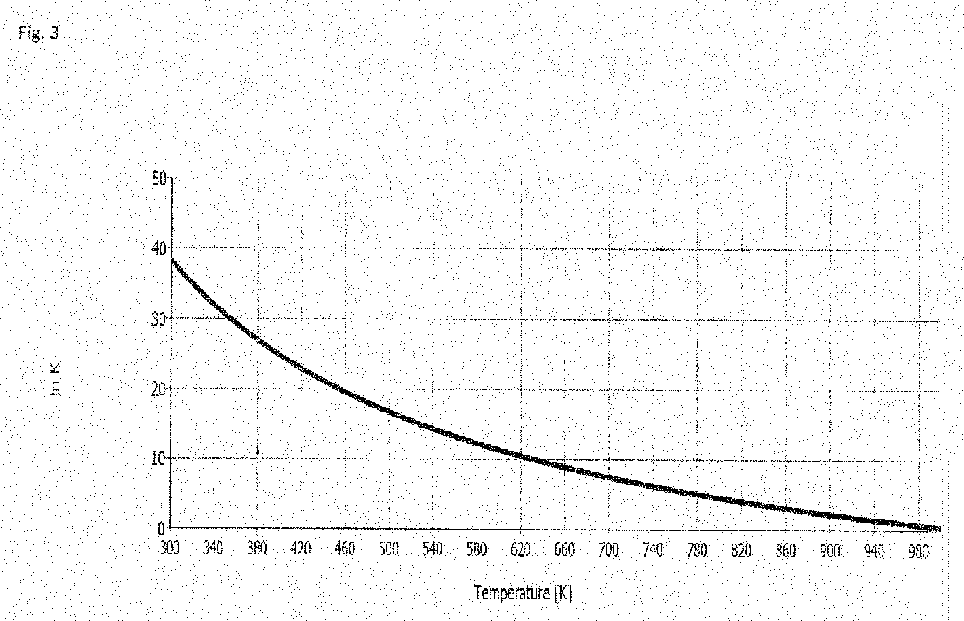

Die berechnete Lage der Gleichgewichtskonstante bei gegebener Temperatur ist für diesen Reaktionstyp ist in Figur 3 dargestellt.

Der angestrebte Wert In K>7 wird Unterhalb von ca. 740 K erreicht. Der Umgang mit gasförmigem Chlorwasserstoffgas ist mit beträchtlichem Aufwand verbunden. Aus diesem Grund erscheint es sinnvoll, Chlorwasserstoff aus Ammoniumchlorid bei einer geeigneten Temperatur freizusetzen und im bevorzugten Temperaturbereich zwischen 710 und 740 K mit dem Schüttgut umzusetzen.

### Beispiel 3: Tetrachlorkohlenstoff

In₂O₃(s) + 1,5 CCl₄ (g) → In₂Cl₆(g) + 1,5 CO₂(g)

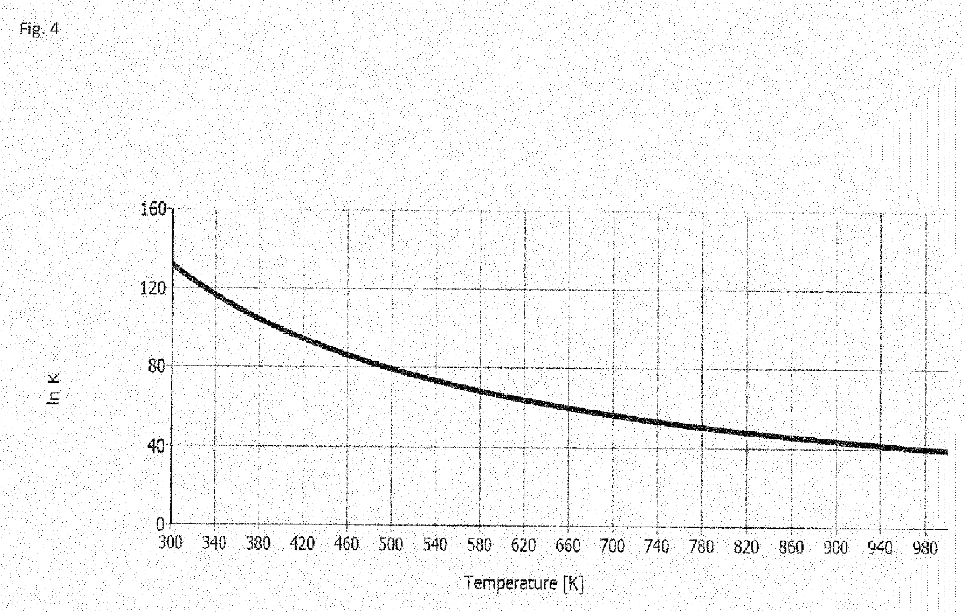

Die berechnete Lage der Gleichgewichtskonstante bei gegebener Temperatur ist für diesen Reaktionstyp ist in Figur 4 dargestellt.

Der angestrebte Wert In K > 7 wird im gesamten dargestellten Temperaturbereich erreicht. Andere Partiell oder teilweise chlorierte Kohlenwasserstoffe kommen ebenso in Betracht.

### Beispiel 4: Tetrachlorsilan

In₂O₃(s) + 1,5 SiCl₄ (g) → In₂Cl₆(g) + 1,5 SiO₂(g)

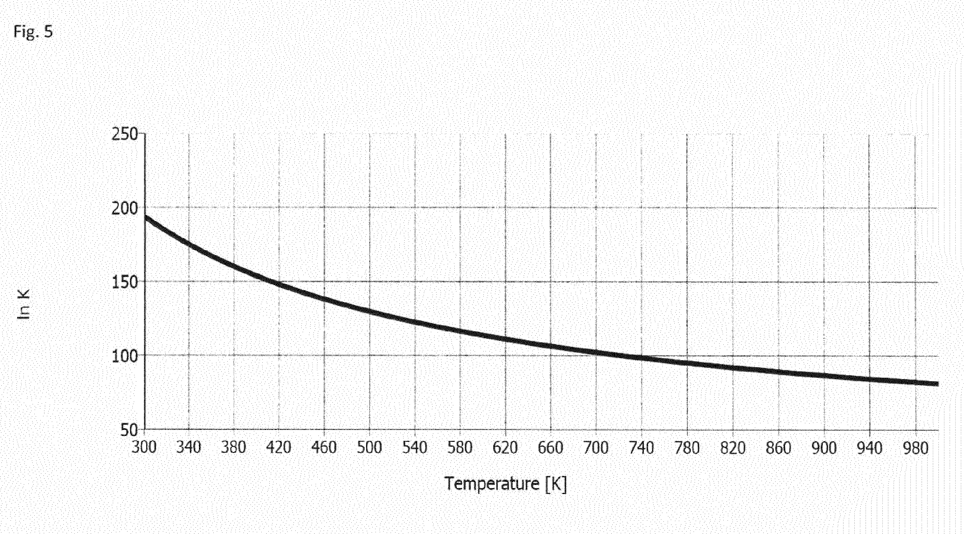

Die berechnete Lage der Gleichgewichtskonstante bei gegebener Temperatur ist für diesen Reaktionstyp ist in Figur 5 dargestellt.

Der angestrebte Wert In K > 7 wird im gesamten dargestellten Temperaturbereich erreicht.

### Beispiel 5: Kombination von Chlor und Schwefel

In₂O₃(s) + 0,1875 S₈ (g) + 3 Cl₂(g) → In₂Cl₆(g) + 1,5 SO₂(g)

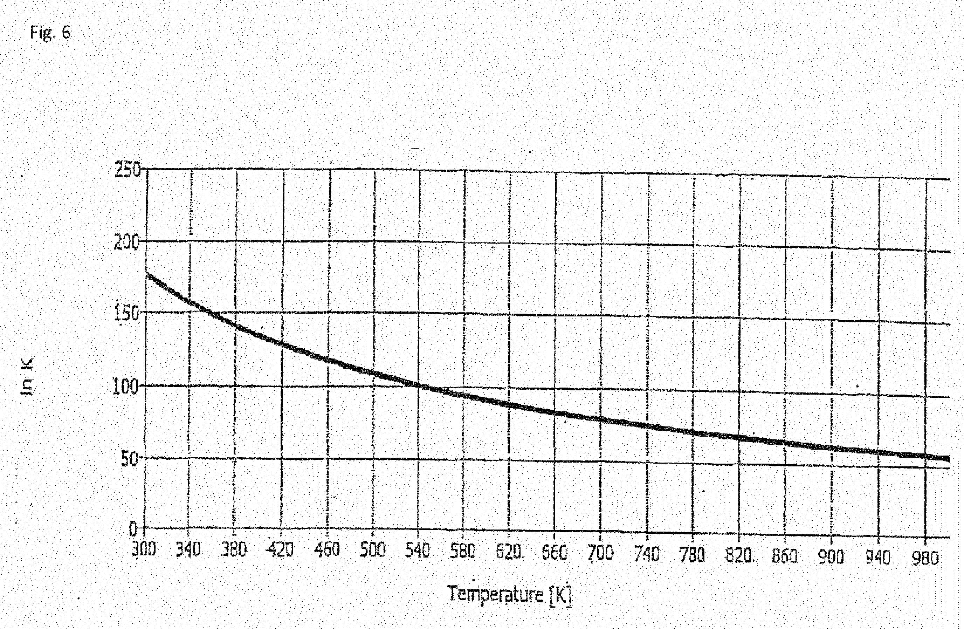

Die berechnete Lage der Gleichgewichtskonstante bei gegebener Temperatur ist für diesen Reaktionstyp ist in Figur 6 dargestellt.

Der angestrebte Wert In K > 7 wird im gesamten dargestellten Temperaturbereich erreicht.

Bevorzugte Reagenzien sind: NH₄Cl, HCl, CCl₄ oder andere vollständig oder andere partiell chlorierte Kohlenwasserstoffe, oder Stoffe, die diese Reagenzien freisetzen sowie Reagenzkombinationen, bei denen eine der Reagenzien zur Bildung negativen freien Standardbildungsenthalpie überführt, hier als Beispiel die Reagenzkombination Schwefel + Chlor.

Bei der Prozessführung sollte angestrebt werden, dass durch die Zersetzung von Ammonioumchlorid nicht mehr Chlorwasserstoff gebildet wird als zur Ausbildung eine Indium(III)-chlorid-Drucks von bevorzugt 0,1 bar notwendig ist. Entsprechend der Reaktionsgleichung ist dies, eine vollständige Umsetzung vorausgesetzt, ein Druck p (HCl) = 0,6 bar. Ein weiterer Überschuss an Chlorwasserstoff führt zur Rückbildung von festem Ammoniumchlorid in der Kondensationszone und damit zur Verunreinigung des gebildeten Indium(III)-chlorids.

## Patentansprüche

1. Verfahren zur Erzeugung von Metallhalogeniden oder Metalloxidhalogeniden aus Metall-Sauerstoffverbindungen oder Metallen, bei dem in einer ersten Reaktionsstufe mindestens ein bei den in der ersten Reaktionsstufe vorherrschenden Bedingungen gasförmiges Halogenierungsreagenz erzeugt wird, das
in einer lokal von der ersten Reaktionsstufe getrennten zweiten Reaktionsstufe mit der Metall-Sauerstoffverbindungen oder Metall zur Reaktion gebracht wird, wobei die Metall-Sauerstoffverbindungen oder Metall in das Metallhalogenid oder Metalloxidhalogenid überführt und das erzeugte Metallhalogenid oder Metalloxidhalogenid anschließend in gasförmigem Aggregatszustand aus der zweiten Reaktionsstufe ausgetragen und aus dem gasförmigen in den flüssigen oder festen Aggregatszustand überführt wird oder die Rückreaktion seiner Bildung eingeht,
wobei die zweite Reaktionsstufe der ersten Reaktionsstufe nachgeschaltet ist und das in der ersten Reaktionsstufe erzeugte mindestens eine Halogenierungsreagenz mittels eines Gasstromes in die zweite Reaktionsstufe befördert wird,
**dadurch gekennzeichnet, dass** das gasförmige Halogenierungsreagenz in der ersten Reaktionsstufe aus einer festen oder flüssigen Verbindung durch Dissoziation, Verdampfen oder Sublimation erzeugt wird,
wobei die
a) feste Verbindung ausgewählt ist aus der Gruppe bestehend aus Ammoniumchlorid, Ammoniumbromid, Ammoniumiodid, AlCl₃ · 6 H₂O, FeCl₃ · 6 H₂O, FeCl₂ · 6 H₂O, MgCl₂ · 6 H₂O sowie Mischungen oder Kombinationen hiervon und/oder
b) flüssige Verbindung ausgewählt ist aus der Gruppe bestehend aus Verbindungen, die durch Verdampfen in das Halogenierungsreagenz überführt werden können.

2. Verfahren nach Anspruch 1, **dadurch gekennzeichnet, dass** mindestens eine Halogenierungsreagenz ausgewählt ist aus der Gruppe bestehend aus
a) Halogenwasserstoffen, insbesondere HCl, HBr oder HI,
b) elementaren Halogenen, insbesondere Cl₂, Br₂ oder I₂,
c) vollständig oder teilweise halogenierten gesättigten oder ungesättigten Kohlenwasserstoffen, insbesondere CCl₄ oder C₂Cl₄,
d) vollständig oder teilweise halogenierten Silanen oder Siloxanen, insbesondere SiCl₄,
e) sowie Mischungen oder Kombinationen hiervon.

3. Verfahren nach einem der vorhergehenden Ansprüche, **dadurch gekennzeichnet, dass** der Austrag des erzeugten Metallhalogenids oder Metalloxidhalogenids in gasförmigem Aggregatszustand aus der zweiten Reaktionsstufe mittels des Gasstromes erfolgt.

4. Verfahren nach einem der vorhergehenden Ansprüche, **dadurch gekennzeichnet, dass** der Gasstrom nacheinander die erste und die zweite Reaktionsstufe durchströmt.

5. Verfahren nach einem der vorhergehenden Ansprüche, **dadurch gekennzeichnet, dass** das Gas des Gasstroms ausgewählt ist aus der Gruppe bestehend aus Inertgasen, insbesondere Stickstoff, Edelgase, oder CO₂ sowie Mischungen oder Kombinationen hiervon.

6. Verfahren nach einem der vorhergehenden Ansprüche, **dadurch gekennzeichnet, dass** in der ersten und/oder zweiten Reaktionsstufe ein Druck von 0,1 bis 2 bar, bevorzugt Atmosphärendruck eingestellt wird.

7. Verfahren nach einem der vorhergehenden Ansprüche, **dadurch gekennzeichnet, dass** die Temperatur
a) in der ersten Reaktionsstufe so gewählt wird, dass das Halogenierungsreagenz einen partiellen Gasdruck von ≥ 0,05 bar, bevorzugt von 0,1 bis 1 bar, bevorzugt von 0,5 bis 0,7 bar beträgt und/oder
b) in der zweiten Reaktionsstufe so gewählt wird, dass das Metallhalogenid oder Metalloxidhalogenid einen partiellen Gasdruck von ≥0,01 bar, bevorzugt von 0,05 bis 1 bar, besonders bevorzugt von 0,08 und 0,2 bar beträgt.

8. Verfahren nach einem der vorhergehenden Ansprüche, **dadurch gekennzeichnet, dass** das Metall, das Metall der Metall-Sauerstoffverbindungen bzw. des Metallhalogenids oder Metalloxidhalogenids ausgewählt ist aus Metallen, die Metallhalogenide oder Metalloxidhalogenide mit Siede- bzw. Sublimationstemperaturen von unterhalb 1700 °C bilden, bevorzugt Indium, Gallium, Germanium, Antimon, Wismut, Tellur, Niob, Tantal, Titan, Zirkon, Hafnium, Magnesium, Eisen, Kupfer, Zink, und/oder Seltenerdmetalle, insbesondere Cer, Lanthan, oder Gemischen hiervon.

9. Verfahren nach einem der vorhergehenden Ansprüche, **dadurch gekennzeichnet, dass** im Falle von Metallhalogeniden oder Metalloxidhalogeniden mit einer Siede- oder Sublimationstemperatur von mehr als 800 °C der Gasstrom mit Aluminiumchlorid und/oder Eisen-(III)-chlorid beladen wird.

10. Verfahren nach einem der vorhergehenden Ansprüche, **dadurch gekennzeichnet, dass** den Metall-Sauerstoffverbindungen oder den Metallen und/oder dem Gasstrom vor der Reaktion ein Reagenz beigemischt wird, das mit dem Sauerstoff der Metall-Sauerstoffverbindungen unter Bildung einer Verbindung mit negativer freier Standardbildungsenthalpie reagiert, bevorzugt Schwefel, Kohlenstoff oder eine Kohlenstoff-haltige Zubereitung.

11. Verfahren nach einem der vorhergehenden Ansprüche, **dadurch gekennzeichnet, dass** die Metall-Sauerstoffverbindungen oder Metalle vor Reaktion von ggf. vorhandenen organischen Verunreinigungen befreit und/oder zerkleinert werden.

12. Verfahren nach einem der vorhergehenden Ansprüche, **dadurch gekennzeichnet, dass** die Metall-Sauerstoffverbindungen oder Metalle auf oder in einer Matrix, bevorzugt einer anorganischen Matrix, bevorzugt Glas oder Keramik, insbesondere Flachbildschirme von Handys, Laptops, Fernsehgeräten, Bildschirmen oder Displays, oder Müllverbrennungsaschen, Braunkohleaschen, Rotschlamm oder Schlacken gebunden sind.

13. Verfahren nach einem der vorhergehenden Ansprüche, **dadurch gekennzeichnet, dass** es kontinuierlich durchgeführt wird.

14. Verfahren nach einem der vorhergehenden Ansprüche, **dadurch gekennzeichnet, dass** das erhaltene Metallhalogenid oder Metalloxidhalogenid in einem nachgelagerten Verfahrensschritt zum elementaren Metall reduziert wird.

15. Verfahren nach einem der vorhergehenden Ansprüche, **dadurch gekennzeichnet, dass** es in einem Strömungsreaktor durchgeführt wird, der eine erste und eine zweite Reaktionskammer, die separat voneinander temperierbar sind, aufweist, wobei die erste und die zweite Reaktionskammer der ersten und zweiten Reaktionsstufe entsprechen, die Reaktionskammern des Strömungsreaktors in Richtung von der ersten zur zweiten Reaktionskammer von einem Gasstrom durchströmbar sind und die Metall-Sauerstoffverbindungen als Schüttgut kontinuierlich durch die erste und zweite Reaktionskammer gefördert werden können.

16. Verfahren nach einem der vorhergehenden Ansprüche, bei dem Indiumchlorid aus Indiumoxid erzeugt wird, wobei in einer ersten Reaktionsstufe Chlorwasserstoff durch thermische Zersetzung von Ammoniumchlorid, bevorzugt bei Temperaturen von 100 bis 450 °C, insbesondere 300 und 400 °C erzeugt wird, der erzeugte Chlorwasserstoff mittels eines Gasstromes in die zweite Reaktionsstufe überführt und dort mit Indiumoxid, bevorzugt bei Temperaturen von 300 bis 600 °C, insbesondere von 400 bis 500 °C zur Reaktion gebracht wird, wobei Indiumchlorid entsteht und das erzeugte Indiumchlorid anschließend mittels des Gasstroms in den gasförmigen Aggregatszustand aus der zweiten Reaktionsstufe ausgetragen und als Feststoff abgeschieden wird.

17. Verfahren nach einem der vorhergehenden Ansprüche zur Verwendung beim Recycling von Metallen.

18. Verfahren nach vorhergehendem Anspruch, zur Verwendung beim Recycling von Metallen aus Flachbildschirmen von Handys, Laptops, Fernsehgeräten, Bildschirmen oder Displays, Müllverbrennungsaschen, Braunkohleaschen, Rotschlamm oder Schlacken oder von auf Trägermaterialien aufgebrachten katalytisch wirksamen Metallen.

## Claims

1. A method for producing metal halides or metal oxyhalides from metal/oxygen compounds or metals, in which
in a first reaction stage at least one halogenation reagent which is gaseous under the conditions prevailing in the first reaction stage is produced which,
in a second reaction stage which is locally separated from the first reaction stage, is caused to react with the metal/oxygen compounds or metal, wherein the metal/oxygen compounds or metal are converted into the metal halide or metal oxyhalide and the metal halide or metal oxyhalide produced is then discharged from the second reaction stage in a gaseous aggregate state and is converted from the gaseous into the liquid or solid aggregate state or undergoes the reverse reaction of its formation,
wherein the second reaction stage succeeds the first reaction stage and the at least one halogenation reagent produced in the first reaction stage is conveyed into the second reaction stage by means of a gas stream,
**characterised in that** the gaseous halogenation reagent in the first reaction stage is produced from a solid or liquid compound by dissociation, evaporation or sublimation,
with the
a) solid compound being selected from the group consisting of ammonium chloride, ammonium bromide, ammonium iodide, AlCl₃ · 6 H₂O, FeCl₃ · 6 H₂O, FeCl₂ · 6 H₂O, MgCl₂ · 6 H₂O and also mixtures or combinations thereof, and/or
b) liquid compound being selected from the group consisting of compounds which can be converted into the halogenation reagent by evaporation.

2. A method according to Claim 1, **characterised in that** at least one halogenation reagent is selected from the group consisting of
a) hydrogen halides, in particular HCl, HBr or HI,
b) elemental halogens, in particular Cl₂, Br₂ or I₂,
c) completely or partially halogenated saturated or unsaturated hydrocarbons, in particular CCl₄ or C₂Cl₄,
d) completely or partially halogenated silanes or siloxanes, in particular SiCl₄,
e) and also mixtures or combinations thereof.

3. A method according to one of the preceding claims, **characterised in that** the discharging of the metal halide or metal oxyhalide which is produced from the second reaction stage in the gaseous aggregate state takes place by means of the gas stream.

4. A method according to one of the preceding claims, **characterised in that** the gas stream flows in succession through the first and the second reaction stage.

5. A method according to one of the preceding claims, **characterised in that** the gas of the gas stream is selected from the group consisting of inert gases, in particular nitrogen, noble gases or CO₂ and also mixtures or combinations thereof.

6. A method according to one of the preceding claims, **characterised in that** a pressure of 0.1 to 2 bar, preferably atmospheric pressure, is set in the first and/or second reaction stage.

7. A method according to one of the preceding claims, **characterised in that** the temperature
a) in the first reaction stage is selected such that the halogenation reagent amounts to a partial gas pressure of ≥ 0.05 bar, preferably of 0.1 to 1 bar, preferably of 0.5 to 0.7 bar and/or
b) in the second reaction stage is selected such that the metal halide or metal oxyhalide amounts to a partial gas pressure of ≥ 0.01 bar, preferably of 0.05 to 1 bar, particularly preferably from 0.08 and 0.2 bar.

8. A method according to one of the preceding claims, **characterised in that** the metal, the metal of the metal/oxygen compounds or of the metal halide or metal oxyhalide is selected from metals which form metal halides or metal oxyhalides with boiling or sublimation temperatures of below 1700°C, preferably indium, gallium, germanium, antimony, bismuth, tellurium, niobium, tantalum, titanium, zirconium, hafnium, magnesium, iron, copper, zinc, and/or rare-earth metals, in particular cerium, lanthanum, or mixtures thereof.

9. A method according to one of the preceding claims, **characterised in that** in the case of metal halides or metal oxyhalides with a boiling or sublimation temperature of more than 800°C the gas stream is laden with aluminium chloride and/or iron (III) chloride.

10. A method according to one of the preceding claims, **characterised in that** a reagent is admixed to the metal/oxygen compounds or the metals and/or the gas stream prior to the reaction, which reagent reacts with the oxygen of the metal/oxygen compounds, forming a compound with negative free standard enthalpy of formation, preferably sulphur, carbon or a carbon-containing preparation.

11. A method according to one of the preceding claims, **characterised in that** the metal/oxygen compounds or metals prior to reaction are freed from any organic impurities present and/or are comminuted.

12. A method according to one of the preceding claims, **characterised in that** the metal/oxygen compounds or metals are bound on or in a matrix, preferably an inorganic matrix, preferably glass or ceramic, in particular flat-screen monitors of mobile phones, laptops, televisions, screens or displays, or waste incineration ash, lignite ash, red mud or slags.

13. A method according to one of the preceding claims, **characterised in that** it is performed continuously.

14. A method according to one of the preceding claims, **characterised in that** the resulting metal halide or metal oxyhalide is reduced to the elemental metal in a downstream method step.

15. A method according to one of the preceding claims, **characterised in that** it is carried out in a flow reactor which has a first and a second reaction chamber, the temperatures of which can be controlled separately from each other, the first and the second reaction chamber corresponding to the first and second reaction stage, it being possible for a gas stream to flow through the reaction chambers of the flow reactor in the direction from the first to the second reaction chamber and the metal/oxygen compounds being able to be conveyed as bulk material continuously through the first and second reaction chamber.

16. A method according to one of the preceding claims, in which indium chloride is produced from indium oxide, wherein in a first reaction stage hydrogen chloride is produced by thermal decomposition of ammonium chloride, preferably at temperatures of 100 to 450°C, in particular 300 and 400°C, the hydrogen chloride produced is transferred into the second reaction stage by means of a gas stream and is caused to react there with indium oxide, preferably at temperatures of 300 to 600°C, in particular of 400 to 500°C, with indium chloride being produced and the indium chloride which is produced then being discharged from the second reaction stage by means of the gas stream in the gaseous aggregate state and being separated off as a solid.

17. A method according to one of the preceding claims, for use in the recycling of metals.

18. A method according to the preceding claim, for use in the recycling of metals from flat-screen monitors of mobile phones, laptops, televisions, screens or displays, waste incineration ash, lignite ash, red mud or slags, or of catalytically effective metals applied to support materials.

## Revendications

1. Procédé de production d'halogénures métalliques ou d'oxyhalogénures métalliques à partir de composés oxygénés de métaux, ou de métaux, dans lequel
dans un premier étage de réaction, on produit un réactif d'halogénation gazeux dans les conditions régnant dans le premier étage de réaction, réactif qui,
dans un deuxième étage de réaction, localement distinct du premier étage de réaction, est mis à réagir avec les composés oxygénés de métaux ou avec le métal, les composés oxygénés de métaux ou le métal étant convertis en l'halogénure métallique ou en l'oxyhalogénure métallique, et l'halogénure métallique ou l'oxyhalogénure métallique produit étant ensuite, à l'état d'un agrégat gazeux, extrait du deuxième étage de réaction, et étant converti de l'état d'agrégat gazeux à l'état d'agrégat liquide ou solide, ou subissant la réaction en retour de sa formation,
le deuxième étage de réaction étant monté en aval du premier étage de réaction, et l'au moins un réactif d'halogénation produit dans le premier étage de réaction étant, à l'aide d'un courant gazeux, envoyé dans le deuxième étage de réaction,
**caractérisé en ce que** le réactif d'halogénation gazeux est produit dans le premier étage de réaction à partir d'un composé solide ou liquide par dissociation, évaporation ou sublimation,
a) le composé solide étant choisi dans le groupe consistant en le chlorure d'ammonium, le bromure d'ammonium, l'iodure d'ammonium, AlCl₃.6H₂O, FeCl₃.6H₂O, FeCl₂.6H₂O, MgCl₂.6H₂O, ainsi que les mélanges ou combinaisons de ceux-ci, et/ou
b) le composé liquide étant choisi dans le groupe consistant en les composés qui peuvent par évaporation être convertis en le réactif d'halogénation.

2. Procédé selon la revendication 1, **caractérisé en ce qu'**au moins un réactif d'halogénation est choisi dans le groupe consistant en :
a) les acides halogènhydriques, en particulier HCl, HBr ou HI,
b) les halogènes élémentaires, en particulier Cl₂, Br₂ ou I₂,
c) les hydrocarbures saturés ou insaturés, entièrement ou partiellement halogénés, en particulier CCl₄ ou C₂Cl₄,
d) les silanes ou siloxanes entièrement ou partiellement halogénés, en particulier SiCl₄,
e) ainsi que les mélanges ou combinaisons de ceux-ci.

3. Procédé selon l'une des revendications précédentes, **caractérisé en ce que** l'évacuation, à partir du deuxième étage de réaction, de l'halogénure métallique ou de l'oxyhalogénure métallique produit à l'état d'un agrégat gazeux s'effectue à l'aide du courant gazeux.

4. Procédé selon l'une des revendications précédentes, **caractérisé en ce que** le courant gazeux traverse successivement le premier et le deuxième étages de réaction.

5. Procédé selon l'une des revendications précédentes, **caractérisé en ce que** le gaz du courant gazeux est choisi dans le groupe consistant en les gaz inertes, en particulier l'azote, les gaz rares ou CO₂, ainsi que les mélanges ou combinaisons de ceux-ci.

6. Procédé selon l'une des revendications précédentes, **caractérisé en ce que**, dans le premier et/ou le deuxième étages de réaction, on ajuste la pression à 0,1 à 2 bar, en particulier à la pression atmosphérique.

7. Procédé selon l'une des revendications précédentes, **caractérisé en ce que** la température,
a) dans le premier étage de réaction, est choisie de telle sorte que le réactif d'halogénation présente une pression gazeuse partielle ≥ 0,05 bar, de préférence de 0,1 à 1 bar, de préférence de 0,5 à 0,7 bar, et/ou
b) dans le deuxième étage de réaction, est choisie de telle sorte que l'halogénure métallique ou l'oxyhalogénure métallique présente une pression gazeuse partielle ≥ 0,01 bar, de préférence de 0,05 à 1 bar, d'une manière particulièrement préférée de 0,08 à 0,2 bar.

8. Procédé selon l'une des revendications précédentes, **caractérisé en ce que** le métal, le métal des composés oxygénés de métaux ou de l'halogénure métallique ou de l'oxyhalogénure métallique est choisi parmi les métaux qui forment des halogénures métalliques ou des oxyhalogénures métalliques ayant une température d'ébullition ou de sublimation inférieure à 1700°C, de préférence l'indium, le gallium, le germanium, l'antimoine, le bismuth, le tellure, le niobium, le tantale, le titane, le zirconium, le hafnium, le magnésium, le fer, le cuivre, le zinc, et/ou les métaux des terres rares, en particulier le cérium, le lanthane ou les mélanges de ceux-ci.

9. Procédé selon l'une des revendications précédentes, **caractérisé en ce que**, dans le cas des halogénures métalliques ou des oxyhalogénures métalliques ayant une température d'ébullition ou de sublimation supérieure à 800°C, on charge le courant gazeux de chlorure d'aluminium et/ou de chlorure de fer(III).

10. Procédé selon l'une des revendications précédentes, **caractérisé en ce que**, avant la réaction, on mélange aux composés oxygénés de métaux ou aux métaux et/ou au courant gazeux un réactif qui réagit avec l'oxygène des composés oxygénés de métaux avec formation d'un composé présentant une enthalpie standard de formation libre négative, de préférence le soufre, le carbone ou un composé contenant du carbone.

11. Procédé selon l'une des revendications précédentes, **caractérisé en ce que** les composés oxygénés de métaux ou les métaux sont, avant la réaction, débarrassés des impuretés organiques éventuellement présentes, et/ou broyés.

12. Procédé selon l'une des revendications précédentes, **caractérisé en ce que** les composés oxygénés de métaux ou les métaux sont liés sur ou dans une matrice, de préférence une matrice inorganique, de préférence le verre ou la céramique, en particulier des écrans plats de téléphones mobiles, des ordinateurs portables, des appareils de télévision, des écrans ou des dispositifs d'affichage, ou des cendres d'incinération des ordures ménagères, des cendres de lignite, de la boue rouge ou des scories.

13. Procédé selon l'une des revendications précédentes, **caractérisé en ce qu'**il est mis en oeuvre en continu.

14. Procédé selon l'une des revendications précédentes, **caractérisé en ce que** l'halogénure métallique ou l'oxyhalogénure métallique obtenu est, dans une étape du procédé subséquente, réduit en métal élémentaire.

15. Procédé selon l'une des revendications précédentes, **caractérisé en ce qu'**il est mis en oeuvre dans un réacteur continu, qui présente une première et une deuxième chambres de réaction, qui peuvent être portées à l'équilibre de température séparément l'une de l'autre, la première et la deuxième chambres de réaction correspondant au premier et au deuxième étages de réaction, les chambres de réaction du réacteur continu pouvant être traversées par un courant gazeux dans la direction allant de la première à la deuxième chambres de réaction, et les composés oxygénés de métaux pouvant être transportés en continu en vrac à travers la première et la deuxième chambres de réaction.

16. Procédé selon l'une des revendications précédentes, dans lequel on produit du chlorure d'indium à partir d'oxyde d'indium, auquel cas, dans le premier étage de réaction, on produit de l'acide chlorhydrique par décomposition thermique de chlorure d'ammonium, de préférence à des températures de 100 à 450°C, en particulier de 300 à 400°C, on transfère à l'aide d'un courant gazeux l'acide chlorhydrique produit dans le deuxième étage de réaction, et on l'y fait réagir avec de l'oxyde d'indium, de préférence à des températures de 300 à 600°C, en particulier de 400 à 500°C, avec formation de chlorure d'indium, et le chlorure d'indium produit étant ensuite extrait du deuxième étage de réaction à l'aide du courant gazeux à l'état d'agrégat gazeux, et étant séparé sous forme solide.

17. Procédé selon l'une des revendications précédentes, pour une utilisation lors du recyclage de métaux.

18. Procédé selon la revendication précédente, pour une utilisation lors du recyclage de métaux à partir d'écrans plats de téléphones mobiles, d'ordinateurs portables, d'appareils de télévision, d'écrans ou de dispositifs d'affichage, de cendres d'incinération des ordures ménagères, des cendres de lignite, de boues rouges ou de scories, ou de métaux catalytiquement actifs appliqués sur des matériaux supports.
